# EUROPÄISCHE PATENTSCHRIFT

(11) **EP 0 830 568 B1**
(45) Veröffentlichungstag und Bekanntmachung des Hinweises auf die Patenterteilung: **14.11.2001**
(21) Anmeldenummer: 96921939.3
(22) Anmeldetag: 05.06.1996
(51) Int. Cl.: G01C 17/04

(54) **NEIGUNGSKOMPENSIERENDE ANZEIGEEINRICHTUNG FÜR EINEN KOMPASS**
INCLINATION-COMPENSATING DISPLAY DEVICE FOR A COMPASS
DISPOSITIF D'AFFICHAGE POUR BOUSSOLES A ELEMENT COMPENSATEUR DE L'INCLINAISON DE LA BOUSSOLE

(30) Priorität: 07.06.1995 CH 166195; 16.08.1995 DE 19529976
(43) Veröffentlichungstag der Anmeldung: 25.03.1998
(73) Patentinhaber: RECTA AG, 2501 Biel (CH)
(72) Erfinder: GLOOR, Hans, CH-2504 Bienne (CH); GIGON, Denis, CH-2502 Bienne (CH)
(74) Vertreter: Leitner, Waldemar, Dr. techn.
(86) Internationale Anmeldenummer: EP9602467
(87) Internationale Veröffentlichungsnummer: WO9641128

(56) Entgegenhaltungen:
- SE-C- 127 623
- US-A- 4 700 490

## Beschreibung

Die Erfindung betrifft eine neigungskompensierende Anzeigeeinrichtung für einen Kompaß, der eine auf einem Spitzenlager bei einer vertikalen Orientierung deselben in einer im wesentlichen horizontalen Ebene drehbar gelagerte Magnetfelddetektionseinrichtung aufweist, die in einem einen Boden und einen Deckel aufweisenden Gehäuse des Kompasses untergebracht ist.

Eine derartige neigungskompensierende Anzeigeeinrichtung ist aus der CH 683 373 der Anmelderin bekannt. Diese in der Praxis bewährte und im Handel eingeführte neigungskompensierende Anzeigeeinrichtung sieht vor, daß diese von der Magnetfelddetektionseinrichtung getrennt gelagert ist und durch einen Mitnehmer mit dieser verbunden ist. So wird erreicht, daß die bei einem üblichen mechanischen Kompaß, bei dem die Anzeigeeinrichtung direkt mit der Magnetfelddetektionseinrichtung starr verbunden ist oder mit dieser identisch ist, auftretenden Nachteile, daß schon bei einer relativ kleinen Neigung (8°-12°) des Kompasses eine Anzeigenadel oder eine Anzeigescheibe der Anzeigeeinrichtung den Deckel oder den Boden des Gehäuses berührt, vermieden wird. Dieser störende Effekt kann auch bei einer Anwendung des Kompasses in verschiedenen Breitengraden durch eine unterschiedliche Inklination des Magnetfeldes der Erde entstehen.

Hierdurch ist der Kompaß nicht mehr funktionstüchtig. Er muß daher vor dem Ablesen in eine Lage gebracht werden, in der die Anzeigeeinrichtung frei schwingen kann. Bei vielen Anwendungen, wie z.B. bei Orientierungsläufen, ist es aber von großer Wichtigkeit, daß die Anzeige möglichst rasch, d.h. ohne eine verzögernde Neuorientierung des Kompasses, und genau abgelesen werden kann. Außerdem kann ein Neigen des Kompasses in nachteiliger Art und Weise zu Peilfehlem führen.

Die bekannte neigungskompensierende Anzeigeeinrichtung für einen Kompaß ist in der Lage, die o.g. störenden Effekte zu eliminieren oder zumindest zu reduzieren. Sie besitzt jedoch den Nachteil, daß hierfür ein hoher Aufwand für das Lager der Anzeigeeinrichtung, welches außerdem genau in axialer Richtung ausgerichtet sein muß, erforderlich ist. Außerdem ist das axiale Ausrichten des Lagers der Anzeigeeinrichtung mit dem Lager der Magnetfelddetektionseinrichtung aufwendig.

Aus der US-PS 2 446 258 ist ein insbesondere für Flugzeuge konzipierter Kompaß bekannt, der ein Kompaßgehäuse aufweist, in dem um eine gehäusefeste vertikale Achse eine Anzeigeeinrichtung in einer zu dieser vertikalen Achse senkrechten Ebene drehbar ist. Die Anzeigeeinrichtung weist in einen fest mit ihr verbundenen, sich parallel zur vorgenannten vertikalen Achse erstreckenden Rahmen auf, in dem über Lagerelemente entlang einer durch diese Lagerelemente festgelegten horizontalen Achse eine als Magnetfelddetektionseinrichtung fungierende magnetische Nadel drehbar gelagert ist. Durch die Lagerung der magnetischen Nadel im Rahmen wird erreicht, daß diese parallel zum Magnetfeld der Erde bleibt.

Aus der SE-A-127623 ist ein flüssigkeitsgefüllter Kompaß bekannt, der eine Kompaßnadel aufweist, unter der zwei Schwimmkörper angeordnet sind. Diese beiden Schwimmkörper dienen dazu, um durch ihren Auftrieb bei nicht-horizontalen Erdmagnetfeldem die Nadel in einer horizontalen Position zu halten. Hierdurch wird eine Parallelführung der Nadel zu einem Boden und/oder einem Deckel des Gehäuses bei einer Neigung desselben verhindert.

Es ist daher Aufgabe der Erfindung, eine neigungskompensierende Anzeigeeinrichtung der eingangs genannten Art derart weiterzubilden, daß auch bei einer größeren Neigung des Gehäuses des Kompasses und bei unterschiedlichen Inklinationen des Erdmagnetfeldes eine hinreichend gute Anzeige gewährleistet ist, wobei aber die erfindungsgemäße neigungskompensierende Anzeigeeinrichtung besonders einfach aufgebaut sein soll.

Diese Aufgabe wird erfindungsgemäß dadurch gelöst, daß im Gehäuse des Kompaßes und/oder an der Anzeigeeinrichtung mindestens zwei Abstandskörper vorgesehen sind, durch die die Anzeigeeinrichtung im Gehäuse des Kompaßes gegenüber einem Boden und/oder einem Deckel des Gehäuses des Kompaßes im wesentlichen zu diesen parallel führbar ist, indem einer der Abstandskörper bei geneigtem Gehäuse am Deckel, am Boden des Gehäuses oder an der Anzeigeeinrichtung anstößt.

Durch diese erfindungsgemäße Maßnahme wird in vorteilhafter Art und Weise erreicht, daß die Neigung der Anzeigeeinrichtung begrenzt wird, da diese Abstandskörper ab einer bestimmten Schräglage des Gehäuses den Deckel und/oder den Boden berühren. Die hierbei zwischen den Abstandskörpern und dem Deckel bzw. dem Boden des Gehäuses entstehende Reibung ist dabei in vorteilhafter Art und Weise derart gering, daß sie die Anzeigegenauigkeit des Kompasses nicht beeinträchtigt.

Eine vorteilhafte Weiterbildung der Erfindung sieht vor, daß die Anzeigeeinrichtung mindestens zwei, symmetrisch zu einem Mittelpunkt der Anzeigeeinrichtung angeordnete, zur Decke und/oder zum Boden des Kompaßgehäuses hingerichtete Abstandskörper aufweist.

Durch diese erfindungsgemäße Maßnahme wird erreicht, daß die Anzeigeeinrichtung auch bei einer großen Neigung des Kompaßgehäuses nicht am Deckel und/oder am Boden anstoßen können.

Eine weitere vorteilhafte Weiterbildung der Erfindung sieht vor, daß mindestens einer der Abstandskörper spitzenartig ausgebildet ist. Eine derartige Ausbildung besitzt den Vorteil, daß die Reibung, die bei einer Bewegung der Anzeigeeinrichtung zwischen dem Abstandskörper und dem Deckel und/oder dem Boden des Kompaßgehäuses auftritt, minimiert wird.

Eine weitere vorteilhafte Weiterbildung der Erfindung sieht vor, daß mindestens einer der Abstandskörper als umlaufende Erhebung der Anzeigeeinrichtung ausgebildet ist.

Eine weitere vorteilhafte Weiterbildung der Erfindung sieht vor, daß zumindest ein Teilbereich des Deckel und/oder des Bodens als Abstandskörper für die Anzeigeeinrichtung ausgebildet sind. Besonders vorteilhaft ist es, wenn hierzu der Decket und/oder der Boden zumindest in einem Teilbereich einen konischen Verlauf aufweist, so daß die Endbereiche der Zeiger der Anzeigeeinrichtung an diesen konisch verlaufenden Teilbereichen zur Verhinderung einer unerwünschten Neigung der Anzeigeeinrichtung angreifen können.

Eine weitere vorteilhafte Weiterbildung der Erfindung sieht vor, daß umlaufende Erhebungen des Deckels und/oder des Bodens des Kompaßgehäuses als Abstandskörper für die Anzeigeeinrichtung fungieren.

Eine weitere vorteilhafte Weiterbildung der Erfindung sieht vor, daß die Anzeigeeinrichtung bei einer vertikalen Onentierung des Spitzenlagers in einer im we-sentlichen vertikalen Ebene beweglich auf der Magnetfelddetektionseinrichtung mittels eines Aufnahmelagers drehbar gelagert ist, dessen mit Lagerelementen der Magnetfelddetektionseinrichtung zusammenwirkendes Lagerelement im wesentlichen rechtwinkelig zur Nord-Süd-Richtung der Magnetfelddetektionseinrichtung verläuft.

Durch die erfindungsgemäßen Maßnahmen wird in besonders vorteilhafter Art und Weise eine neigungskompensierende Anzeigeeinrichtung für einen Kompaß geschaffen, die sich in einem labilen Gleichgewicht befindet und sich um die Lagerachse in einer zur West-Ost-Richtung der Magnetfelddetektionseinrichtung orthogonalen Ebene drehen kann. Diese erfindungsgemäß vorgesehene Drehbarkeit der Anzeigeeinrichtung bewirkt, daß diese einer Neigung der Magnetfelddetektionseinrichtung oder des Gehäuses des Kompasses in der Nord-Süd-Richtung der entsprechenden Bewegung nicht folgt, sondern vielmehr ihr Lage im wesentlichen beibehält, so daß in vorteilhafter Art und Weise verhindert wird, daß die erfindungsgemäße Anzeigeeinrichtung an den Deckel oder den Boden des Kompaßgehäuses anstößt. Da bei einer Neigung des Kompaßgehäuses in der Ost-West-Richtung die Anzeigeeinrichtung keine Bewegung um die Kompaßachse ausführt, ist es nicht erforderlich, die Anzeigeeinrichtung von der Neigungsbewegung der Magnetfelddetektionseinrichtung zu entkoppeln. Somit ist durch die erfindungsgemäßen Maßnahmen in besonders einfacher Art und Weise ein störungsfreier Betrieb eines mit der erfindungsgemäßen neigungskompensierenden Anzeigeeinrichtung ausgerüsteten Kompasses über den gesamten Winkelbereich möglich.

Eine weitere vorteilhafte Weiterbildung der Erfindung sieht vor, daß die Anzeigeelemente der Anzeigeeinrichtung über ringförmige Verbindungselemente mit der Lagerachse verbunden sind, wobei diese Verbindungselemente derart ausgebildet sind, daß bei einer Neigung des Permanentmagnetsystems der Magnetfelddetektonseinrichtung dieses System durch einen von der Lagerachse und den ringförmigen Verbindungselementen begrenzten Zwischenraum hindurchtreten kann. Eine derartige Maßnahme besitzt den Vorteil, daß auch bei einem sehr kleinen Abstand zwischen der Magnetfelddetektionseinrichtung und der Anzeigeeinrichtung deren Bewegung nicht durch das Permanentmagnetsystem der Magnetfelddetektionseinrichtung behindert werden kann.

Eine weitere vorteilhafte Weiterbildung der Erfindung sieht vor, daß bei einer als Anzeigescheibe ausgebildeten Anzeigeeinrichtung diese gegen außen mindestens in der Ost-West-Richtung des Permanentsystems und vorzugsweise auch in der Nord-Süd-Richtung, gegen den Boden hin leicht gebogen ist. Eine derartige Maßnahme besitzt den Vorteil, daß dadurch eine größere Schrägstellung der Anzeigescheibe gegenüber dem Gehäuse möglich ist, ohne daß diese dabei am Deckel oder am Boden des Kompaßgehäuses anstößt.

Weitere vorteilhafte Weiterbildungen der Erfindung sind Gegenstand der Unteransprüche.

Weitere Einzelheiten und Vorteile der Erfindung sind dem Ausführungsbeispiel zu entnehmen, das im folgenden anhand der Figuren beschrieben wird. Es zeigen:
- Figur 1: eine Draufsicht auf ein Ausführungsbeispiel einer Anzeigeeinrichtung,
und
- Figur 2: einen Schnitt durch einen die Anzeigeeinrichtung der Figur 1 verwendenden Kompaß entsprechend eines Schnittes entlang der Linie A-A der Figur 1

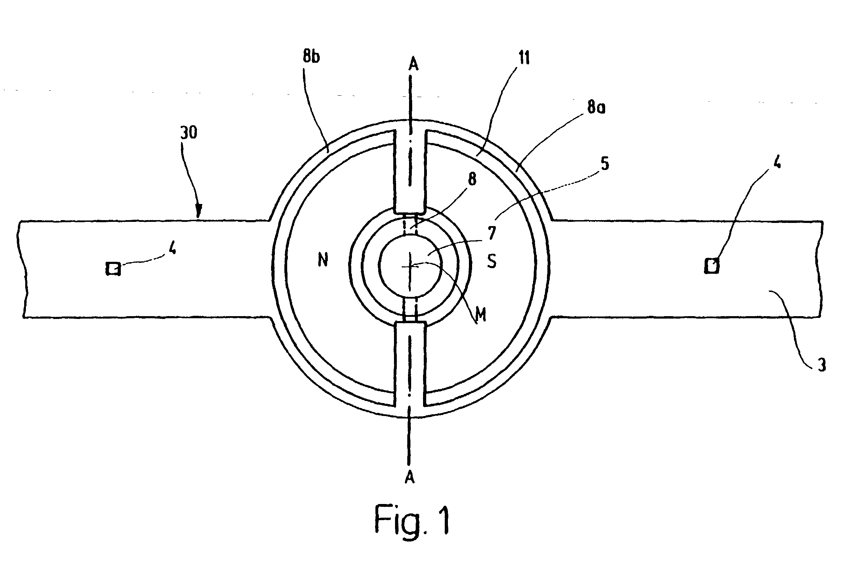

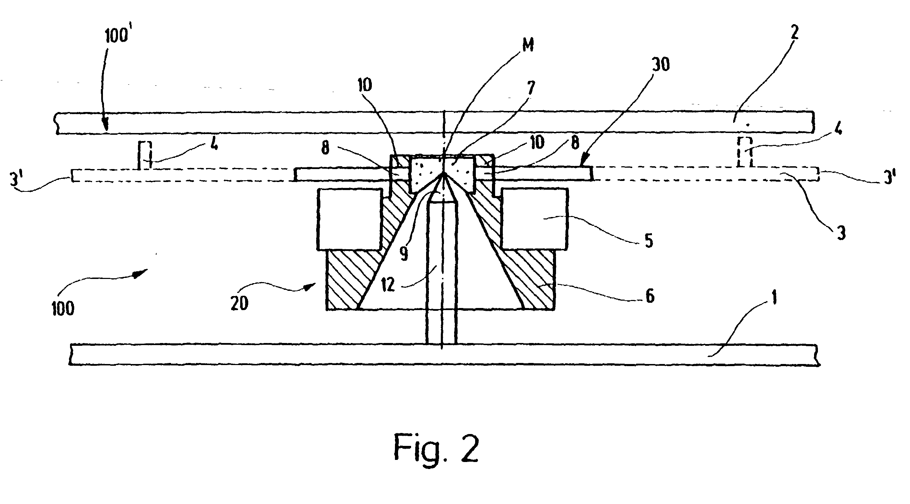

Das in den Figuren 1 und 2 dargestellte Ausführungsbeispiel einer neigungskompensierten Anzeigeeinrichtung 30 für einen Kompaß 100 ist in einem Kompaßgehäuse 100' aufgenommen, von dem in Figur 2 nur ein durchsichtiger Deckel 2 und ein vorzugsweise ebenfalls durchsichtig ausgebildeter Boden 1 dargestellt ist. In dem durch den Boden 1 und den Deckel 2 begrenzten Kompaßgehäuse 100' ist vorzugsweise eine Flüssigkeit oder ein Gas vorhanden, die vor allem zur Dämpfung der Bewegung des Anzeigesystems 30 dienen. Auf einem auf dem Boden 1 befestigten Schaft 12 ist über ein auf dessen Spitze 9 aufsetzendes Spitzenlager 7 eine allgemein mit 20 bezeichnete Magnetfelddetektionseinrichtung angeordnet, die im wesentlichen aus dem auf der Spitze 9 des Schaftes 12 gelagerten Spitzenlager 7, das vorzugsweise aus einem synthetischen Rubin hergestellt ist, einen mit dem Spitzenlager 7 fest verbundenen Magnetträger 6 und einem Permanentmagneten 5, der vorzugsweise zylindrische Form aufweist, besteht. Das Spitzenlager 7 bildet hierbei zusammen mit der Spitze 9 des Schaftes 12 ein Kompaßlager aus, das sehr wenig Reibung aufweist und dem Magnetträger 6 eine große Auslenkung erlaubt, ohne mit einem anderen Teil des Kompasses 100 in Kontakt zu kommen.

Um nun zu verhindern, daß eine Neigungsbewegung der Magnetfelddetektionseinrichtung 20 in Nord-Süd-Richtung auf die Anzeigeeinrichtung 30 übertragen wird, sind im Magnetträger 6 zwei als Lagerelemente fungierende Bohrungen 10 vorgesehen, die ungefähr in der Ebene des Rotationspunktes des Spitzenlagers 7 um die Spitze 9 angeordnet sind. In den Bohrungen 10 ist eine ein Lagerelement ausbildende Lagerachse 8 der Anzeigeeinrichtung 30 drehbar aufgenommen, wobei die Lagerachse 8 im wesentlichen senkrecht zur Nord-Süd-Richtung der Magnetfelddetektionseinrichtung 20 angeordnet ist. Die entweder als durchgehende Achse oder als zwei radiale Teilachsen ausgebildete Lagerachse 8 der Anzeigeeinrichtung 30 ist über ringförmige Verbindungselemente 8a, 8b mit zwei Zeigem 3 verbunden, welche die eigentliche Anzeigefunktion der Anzeigeeinrichtung 30 ausführen.

Wird nun das Kompaßgehäuse 100' des Kompasses 100 in der Nord-Süd-Richtung des Magnetfelddetektionssystems 20 geneigt, stellt sich der Permanentmagnet 5 schräg zur Spitze 9 des mit dem Boden 1 des Kompaßgehäuses 100' verbundenen Schaftes 12. Aufgrund der beweglichen Lagerung der Anzeigeeinrichtung 30 in den als Lagerstellen fungierenden Bohrungen 10 des Magnetträgers 6 der Magnetfelddetektionseinrichtung 20 ist in diesem Fall in vorteilhafter Art und Weise keine Zwangskopplung der Bewegung der Magnetfelddetektionseinrichtung 20 und der Anzeigeeinrichtung 30 gegeben, so daß diese nicht von der durch die Neigung des Gehäuses 100' in der Nord-Süd-Richtung der der Inklination des Erdmagnetfeldes ausgelösten Bewegung der Magnetfelddetektionseinrichtung 20 folgt. Da - wie bereits eingangs erwähnt wurde - bei einer Neigung des Gehäuses in der West-Ost-Richtung der Magnetfelddetektionseinrichtung 20 kein Drehmoment auf die Anzeigeeinrichtung 30 einwirkt und diese somit immer in die Nord-Süd-Richtung zeigt, ist keine Entkoppelung der beiden Einrichtungen 20, 30 zwingend erforderlich. Somit wird durch die oben beschriebene Lagerung der Anzeigeeinrichtung 30 über die im wesentlichen senkrecht zur Nord-Süd-Richtung der Magnetfelddetektionseinrichtung 20 angeordneten Lagerachse 8 in besonders einfacher Art und Weise eine weitgehend störungsfreie Beweglichkeit der Anzeigeeinrichtung 30 über den vollen Winkelbereich gewährleistet.

Hierbei ist außerdem von Vorteil, daß bei einer Neigung der Magnetfelddetektionseinrichtung 20 deren Permanentmagnet 5 durch den von den ringförmigen Verbindungselementen 8a, 8b und der Lagerachse 8 begrenzten Zwischenraum hindurchtreten kann, so daß es in vorteilhafter Art und Weise möglich ist, nur einen geringen Abstand zwischen der Anzeigeeinrichtung 30 und der Magnetfelddetektionseinrichtung 20 vorzusehen. Eine derartige Anordnung besitzt den Vorteil, daß ein derartiger Kompaß 100 besonders kompakt baut, weshalb er in vorteilhafter Art und Weise in einem flachen Kompaßgehäuse 100' verwendet werden kann.

Wenn genügend Platz zur Ausbildung des Kompasses 100 zur Verfügung steht, und es deshalb nicht erforderlich ist, daß die Anzeigeeinrichtung 30 und die Magnetfelddetektionseinrichtung 20 eng beabstandet zueinander angeordnet sind, so ist es natürlich möglich, die durch die ringförmigen Verbindungselemente 8a, 8b festgelegte Ringscheibe auch als Vollscheibe auszubilden, welche kostengünstiger herstellbar ist als die weiter oben beschriebene Konstruktion.

Um zu verhindern, daß die Zeiger 3 der Anzeigeeinnchtung 30 bei einer größeren Neigung des Gehäuses 100' oder bei einem sehr flach bauenden Gehäuse 100' des Kompasses 100 an dem Boden 1 oder dem Deckel 2 des Gehäuses 100' anstoßen, ist in vorteilhafter Art und Weise vorgesehen, daß auf den Zeigern 3 der Anzeigeeinrichtung 30 mehrere Abstandselemente 4 angeordnet sind, welche - wie am besten aus Figur 2 ersichtlich ist - vorzugsweise spitzenartig ausgebildet sind. Diese Abstandskörper 4 sind vorzugsweise symmetrisch auf den Zeigern 3 angeordnet, wobei eine vom Mittelpunkt M der Anzeigeeinrichtung 30 entfernte Anordnung der Abstandskorper 4 bevorzugt wird. Diese vorzugsweise nach einem Formätzen oder -stanzen aus den Zeigern 3 gebogenen Abstandskörper 4 verhindern, daß die Spitzen 3' der Zeiger 3 bei einer zu großen Neigung des Kompaßgehäuses 100' am Deckel 2 und/oder am Boden 1 des Kompaßgehäuses 100' anstoßen können, da diese spitzenartig ausgebildeten Abstandskörper 4 in diesem Fall am Deckel 2 und/oder am Boden 1 ansetzen und die Neigungsbewegung der Anzeigeeinrichtung 30 derart limitieren. Hierbei tritt zwar eine die Bewegung der Anzeigeeinrichtung 30 störende Reibung zwischen den Abstandskörpem 4 und dem Deckel 2 und/oder dem Boden 1 auf, jedoch ist diese derart gering, daß hierdurch die Beweglichkeit der Anzeigeeinrichtung 30 und somit die Anzeigegenauigkeit des Kompasses 100 nicht beeinflußt werden.

Abschließend zu o.g. Ausführungsbeispiel ist noch anzuführen, daß es für eine Reihe von Anwendungszwecken vorteilhaft sein kann, wenn die Zeiger 3 in der Ost-West-Richtung der Magnetfelddetektionseinrichtung 20 gegen den Boden 1 hin leicht gebogen ausgeführt sind, so daß eine größere Schrägstellung der Zeiger 3 gegenüber dem Kompaßgehäuse 100 möglich ist.

Die in den Figuren 1 und 2 gezeigte Ausgestaltung der Anzeigeeinrichtung 30 mit zwei Zeigern 3 ist nicht die einzig mögliche. Vielmehr sind eine Reihe von unterschiedlichen Gestaltungsmöglichkeiten für die Anzeigeeinrichtung 30 denkbar. Beispielhafterweise sollte hier noch angeführt werden, daß anstelle der Zeiger 3 auch eine Anzeigescheibe eingesetzt werden kann, welche im wesentlichen die gleiche Fläche besitzt wie der Deckel 2 des Kompaßgehäuses 100'. In diesem Fall ist es dann von Vorteil, wenn die Anzeigescheibe in radialer Richtung gesehen nach außen gegen den Boden hin leicht gebogen ist, um eine größere Schrägstellung der Anzeigescheibe gegenüber dem Kompaßgehäuse 100' zu ermöglichen. Die auf den Zeigem 3 oder der Anzeigescheibe der Anzeigeeinrichtung 30 angeordneten Abstandskörper 4 können durch umlaufende Erhebungen, die auch unterbrochen ausgeführt sein können, des Deckels 2 oder des Bodens 1 des Kompaßgehäuses 100' ersetzt werden.

Es bedarf an und für sich keiner Erwähnung, daß das vorstehend als Lagerachse 8 ausgebildete Lagerelement der Anzeigeeinrichtung 30 auch als Kipplager (Messerlager) ausgebildet sein kann. In diesem Fall wird dann anstelle der Bohrungen 10 eine V-förmige Aufnahme verwendet.

Abschließend ist noch auszuführen, daß auch ein Teilbereich des Deckels 2 und/oder des Bodens 1 als Abstandskörper für die Anzeigeeinrichtung 30 fungieren kann. Beispielhafterweise sei hierbei erwähnt, daß der Deckel 2 und/oder der Boden 1 zumindest in einem Teilbereich einen konischen Verlauf aufweist, so daß die Endbereiche der Zeiger 3 an diesen konisch verlaufenden Teilbereichen zur Verhinderung einer unerwünschten Neigung angreifen können.

## Patentansprüche

1. Kompaß mit einem zumindest teilweise durchsichtigen Gehäuse (100'), in dem eine um ein Spitzenlager (7) bei einer vertikalen Orientierung desselben (7) in einer im wesentlichen horizontalen Ebene drehbar gelagerte Magnetfelddetektionseinrichtung (20) und eine neigungskompensierende Anzeigeeinrichtung (30) angeordnet ist, **dadurch gekennzeichnet, daß** im Gehäuse (100') des Kompaßes (100) und/oder an der Anzeigeeinrichtung (30) mindestens zwei Abstandskörper (4) vorgesehen sind, durch die (4) die Anzeigeeinrichtung (30) im Gehäuse (100') des Kompaßes (100) gegenüber einem Boden (1) und/oder einem Deckel (2) des Gehäuses (100') des Kompaßes (100) im wesentlichen zu diesen (2, 1) parallel führbar ist, indem einer der Abstandskörper (4) bei geneigtem Gehäuse (100') am Deckel (2) oder am Boden (1) des Gehäuses (100') oder an der Anzeigeeinrichtung (30) anstößt.

2. Kompaß nach Anspruch 1, **dadurch gekennzeichnet, daß** mindestens einer der Abstandskörper (4) an der Anzeigeeinrichtung (30) derart angebracht und zum Deckel (2) oder zum Boden (1) des Kompaßgehäuses (100') hin gerichtet ist, daß durch den Abstandskörper (4) ein Anstoßen der Anzeigeeinrichtung (30) am Gehäuse (100') des Kompaßes (100) verhinderbar ist.

3. Kompaß nach Anspruch 2, **dadurch gekennzeichnet, daß** die Anzeigeeinrichtung (30) mindestens zwei, beidseitig zu einem Mittelpunkt (M) der Anzeigeeinrichtung (30) angeordnete, zum Deckel (2) und/oder zum Boden (3) des Kompaßgehäuses (100') hin gerichtete Abstandskörper (4) aufweist.

4. Kompaß nach einem der Ansprüche 1 bis 3, **dadurch gekennzeichnet, daß** mindestens einer der Abstandskörper (4) spitzenförmig ausgebildet ist.

5. Kompaß nach einem der vorangehenden Ansprüche, **dadurch gekennzeichnet, daß** die Abstandskörper (4) nach einem Formätzen oder -stanzen aus der Anzeigeeinrichtung (30) herausbiegbar sind.

6. Kompaß nach einem der Ansprüche 1 bis 5, **dadurch gekennzeichnet, daß** die Anzeigeeinrichtung (30) als Anzeigescheibe ausgebildet ist.

7. Kompaß nach Anspruch 6, **dadurch gekennzeichnet, daß** die mindestens zwei Abstandskörper (4) der Anzeigeeinrichtung (30) als umlaufende Erhebungen der Anzeigescheibe ausgebildet sind.

8. Kompaß nach einem der Ansprüche 1 bis 7, **dadurch gekennzeichnet, daß** die Anzeigeeinrichtung (30) bei einer vertikalen Orientierung des Spitzenlagers (7) in einer im wesentlichen vertikalen Ebene beweglich auf der Magnetfelddetektionseinrichtung (20) mittels eines Aufnahmelagers (8, 10) drehbar gelagert ist, dessen (30) mit Lagerelementen (10) der Magnetfelddetektionseinrichtung (20) zusammenwirkendes Lagerelement (8) im wesentlichen rechtwinkelig zur Nord-Süd-Richtung der Magnetfelddetektionseinrichtung (20) verläuft.

9. Kompaß nach einem der Ansprüche 1 bis 8, **dadurch gekennzeichnet, daß** umlaufende Erhebungen des Deckels (2) und/oder des Bodens (1) des Kompaßgehäuses (100') als Abstandskörper für die Anzeigeeinrichtung (30) fungieren.

10. Kompaß nach einem der Ansprüche 1 bis 9, **dadurch gekennzeichnet, daß** zumindest ein Teilbereich des Deckels (2) und/oder des Bodens (1) des Kompaßgehäuses (100') konisch ausgebildet ist.

## Claims

1. A compass having an at least partially transparent housing (100') in which a magnetic field detection means (20) being capable of rotating around a conical pivot bearing (7), on which it is mounted, in a generally horizontal plane, when the conical pivot bearing (7) is vertically orientated, and a tilt compensating indicator device (30) are arranged, **characterized in that** at least two spacer elements (4) are provided in the housing (100') of the compass (100) and/or on the indicator device (30), by which (4) the indicator device (30) is guideable in the housing (100') of the compass (100) relative to a bottom (1) and/or a top (2) of the housing (100') of the compass (100) generally parallel to them (2,1) in a way that one of the spacer elements (4) abuts against the top (2) or against the bottom (1) of the housing (100') or against the indicator device (30) when the housing (100') is tilted.

2. Compass according to claim 1, **characterized in that** at least one of the spacer elements (4) is arranged on the indicator device (30) and orientated towards the top (2) or the bottom (1) of the housing (100') of the compass (100) in such a manner that by means of the spacer element (4) an abutting of the indicator device (30) against the housing (100') of the compass (100) can be prevented.

3. Compass according to claim 2, **characterized in that** the indicator device (30) has at least two spacer elements (4) arranged on two opposite directions relative to a center point (M) of the indicator device (30) and pointing towards the top and/or the bottom (3) of the compass housing (100').

4. Compass according to one of the claims 1 to 3, **characterized in that** at least one of the spacer elements (4) is designed with a pointed tip.

5. Compass according to one of the preceding claims, **characterized in that** the spacer elements (4) can be bent out from the indicator device (30) after a contour etching or pressure forming process.

6. Compass according to one of the claims 1 to 5, **characterized in that** the indicator device (30) is designed as an indicator disc.

7. Compass according to claim 6, **characterized in that** the at least two spacer elements (4) of the indicator device (30) are designed as circular elevations of the indicator disc.

8. Compass according to one of the claims 1 to 7, **characterized in that** the indicator device (30) is mounted pivotally moveable in a generally vertical plane on the magnetic field detection means (20) via a bearing (8, 10), when the conical pivot bearing (7) is orientated vertically, with a bearing element (8) of the indicator device (30), which interacts with bearing elements (10) of the magnetic field detection means (20) being orientated generally orthogonally to the North-South direction of the magnetic field detection means (20).

9. Compass according to on of the claims 1 to 8, **characterized in that** circular elevations of the top (2) and/or of the bottom (1) of the compass housing (100') act as spacer elements for the indicator device (30).

10. Compass according to one of the claims 1 to 9, **characterized in that** at least a part of the top (2) and/or of the bottom (1) of the compass housing (100') is conically formed.

## Revendications

1. Boussole comportant un boîtier (100') au moins partiellement transparent, dans lequel sont disposés un dispositif de détection de champ magnétique (20), monté avec possibilité de tourner dans un plan essentiellement horizontal, autour d'un palier à pivot (7), avec une orientation verticale de ce dernier (7), et un dispositif d'affichage (30) à élément compensateur de l'inclinaison de la boussole,
**caractérisée en ce que**, dans le boîtier (100') de la boussole (100) et/ou sur le dispositif d'affichage (30), sont prévus au moins deux pièces d'écartement (4), par lesquelles (4) le dispositif d'affichage (30) est guidé, dans le boîtier (100') de la boussole (100), par rapport à un fond (1) et/ou un couvercle (2) du boîtier (100') de la boussole (100), en étant essentiellement parallèle à ceux-ci (1, 2), tandis qu'en cas d'inclinaison du boîtier (100'), l'une des pièces d'écartement (4) vient buter contre le couvercle (2) ou le fond (1) du boîtier (100') ou contre le dispositif d'affichage (30) de la boussole (100).

2. Boussole suivant la revendication 1, **caractérisée en ce qu'**au moins l'une des pièces d'écartement (4) est installée sur le dispositif d'affichage (30) et est dirigée vers le couvercle (2) ou le fond (1), de façon à empêcher que, du fait de la pièce d'écartement (4), le dispositif d'affichage (30) vienne buter contre le boîtier (100') de la boussole (100).

3. Boussole suivant la revendication 2, **caractérisé en ce que** le dispositif d'affichage (30) présente au moins deux pièces d'écartement (4) disposées des deux côtés d'un point médian (M) du dispositif d'affichage (30) et dirigées vers le couvercle (2) et/ou le fond (3) du boîtier (100') de la boussole.

4. Boussole suivant l'une des revendication 1 à 3, **caractérisée en ce qu'**au moins l'une des pièces d'écartement (4) est réalisée en forme de pointe.

5. Boussole suivant l'une des revendications précédentes, **caractérisée en ce que** les pièces d'écartement (4) peuvent être obtenues par étirage, à partir du dispositif d'affichage (30), après gravure ou emboutissage de leur forme.

6. Boussole suivant l'une des revendications 1 à 5, **caractérisée en ce que** le dispositif d'affichage (30) est réalisé sous la forme d'un disque d'affichage.

7. Boussole suivant la revendication 6, **caractérisée en ce que** les pièces d'écartement (4), au moins au nombre de deux, du dispositif d'affichage (30) sont réalisées sous la forme de surélévations ou bossages circulaires du disque d'affichage.

8. Boussole suivant l'une des revendications 1 à 7, **caractérisée en ce que** le dispositif d'affichage (30), pour une orientation verticale du palier à pivot (7), est monté mobile dans un plan essentiellement vertical et tournant sur le dispositif (20) de détection de champ magnétique, au moyen d'un palier de positionnement (8, 10), dont l'élément de palier (8), agissant en coordination avec des éléments de palier (10) du dispositif (20) de détection de champ magnétique, présente une direction essentiellement perpendiculaire à la direction nord-sud du dispositif (20) de détection de champ magnétique.

9. Boussole suivant l'une des revendications 1 à 8, **caractérisée en ce que** des surélévations ou bossages circulaires du couvercles (2) et/ou du fond (1) du boîtier (100') de la boussole font fonction de pièces d'écartement pour le dispositif d'affichage (30).

10. Boussole suivant l'une des revendications 1 à 9, **caractérisée en ce qu'**au moins une zone partielle du couvercle (2) et/ou du fond (1) du boîtier (100') de la boussole (100) est réalisée conique.
